# FASCICULE DE BREVET EUROPEEN

(11) **EP 3 055 148 B1**
(45) Date de publication et mention de la délivrance du brevet: **14.11.2018**
(21) Numéro de dépôt: 14793210.7
(22) Date de dépôt: 15.09.2014
(51) Int. Cl.: B60J 1/08, B62D 25/04, B62D 25/00

(54) **ÉLÉMENT D'HABILLAGE D'UN PANNEAU DE CARROSSERIE D'UN VÉHICULE COMPRENANT UNE PORTION TRANSPARENTE OU TRANSLUCIDE**
VERKLEIDUNGSELEMENT FÜR EINE FAHRZEUGKAROSSERIEPLATTE MIT EINEM TRANSPARENTEN ODER TRANSLUZENTEN TEIL
TRIM ELEMENT FOR A VEHICLE BODY PANEL COMPRISING A TRANSPARENT OR TRANSLUCENT PORTION

(30) Priorité: 11.10.2013 FR 1359884
(43) Date de publication de la demande: 17.08.2016
(73) Titulaire: Renault S.A.S., 92100 Boulogne-Billancourt (FR)
(72) Inventeur: BEZEAULT, Loic, F-78000 Versailles (FR); HEWAK, Gregor, F-95490 Vaureal (FR)
(86) Numéro de dépôt international: PCT/FR2014/052287
(87) Numéro de publication internationale: WO 2015/052393

(56) Documents cités:
- WO-A1-2006/046034
- WO-A1-2010/115585
- WO-A1-2015/019827
- WO-A1-2016/151631
- JP-A- 2006 056 470
- US-A1- 2002 089 215

## Description

La présente invention concerne un élément d'habillage d'un panneau de carrosserie d'un véhicule comprenant une portion transparente ou translucide.

L'invention concerne également un panneau de carrosserie d'un véhicule comprenant une portion transparente ou translucide pourvu d'un tel élément d'habillage ainsi qu'un véhicule, notamment un véhicule automobile, dont la caisse est pourvue d'un tel panneau de carrosserie.

Traditionnellement, le toit des véhicules automobiles est raccordé au reste de la carrosserie par deux montants avant qui bordent le pare-brise et deux montants arrière qui se situent généralement dans le prolongement de bords arrière de portières arrière, ou de portières avant si le véhicule ne possède pas de portières arrière.

Ces montants avant et arrière ont généralement des dimensions, en taille et en diamètre, qui sont conséquentes afin de renforcer la rigidité mécanique de la structure du véhicule. Il est connu par le document WO2016/151631 d'habiller ces montants d'une garniture intérieure.

Cependant, de tels montants au regard de leurs dimensions particulières et de leur disposition dans le véhicule peuvent être à l'origine d'une obstruction d'une partie du champ de vision du conducteur ou des passagers de ce véhicule.

Une telle obstruction peut s'avérer être très dangereuse pour la sécurité du conducteur et de ces passagers mais également pour celle de piétons évoluant dans l'environnement immédiat du véhicule.

Pour pallier cet inconvénient et augmenter de façon significative ce champ de vision, des panneaux latéraux de la carrosserie du véhicule ont été pourvus d'une portion transparente ou translucide telle qu'une vitre afin de venir agrandir la surface vitrée du véhicule. De telles panneaux sont appelées « custodes ».

Ces panneaux peuvent être aménagés au niveau des parties avant et arrière du véhicule en étant ajoutés de part et d'autre des côtés latéraux du pare-brise et de la vitre arrière.

Ainsi, de tels panneaux permettent d'accroître la visibilité du conducteur et des passagers et d'améliorer alors l'éclairage naturel de l'habitacle.

Cependant, ces panneaux présentent un inconvénient majeur qui est de rendre visible l'intérieur du véhicule par des personnes situées à l'extérieur en particulier dans l'environnement immédiat du véhicule.

La présente invention a pour objet de remédier en tout ou partie aux différents inconvénients cités précédemment.

A cet effet, l'invention repose sur un panneau de carrosserie d'un véhicule, notamment une custode, comprenant une portion transparente ou translucide, le panneau comprend un élément d'habillage amovible comportant un corps pourvu d'une structure comprenant des ouvertures susceptibles d'autoriser le passage de la lumière au travers de ce corps, ledit corps comprenant au moins un élément de liaison permettant de le fixer de manière réversible au niveau dudit panneau de carrosserie, l'élément d'habillage étant monté dans un logement compris dans un habitacle du véhicule, le logement étant constitué d'une paroi formée par des éléments de garniture ou des composantes structurelles de montants avant ou arrière et d'un fond correspondant à ladite portion du panneau.

Chaque élément de liaison peut être agencé au niveau de parois latérales dudit corps.

Le corps peut présenter présente une forme allongée avec une section transversale trapézoïdale et/ou une section longitudinale ayant sensiblement la forme d'un parallélogramme.

Le corps peut comporter une face intérieure dont la surface est inférieure à celle d'une face extérieure.

Les ouvertures peuvent être distribuées sur le corps de sorte que sa structure forme un maillage.

L'élément d'habillage peut être apte à être fixé sur tous panneaux de carrosserie comprenant une vitre fixe et formant une vitre arrière, un pavillon panoramique ou encore une custode.

Un élément de liaison peut être un élément de clipage, d'emboîtage, de fixation positive ou encore à une bande ou une pastille en matière élastique ou déformable.

Le logement peut être défini pour recevoir tout ou partie du corps de l'élément d'habillage dont une face intérieure est agencée en regard de ladite portion du panneau, lorsque l'élément d'habillage est monté dans ledit logement.

Le corps de l'élément d'habillage peut s'étendre sur toute une épaisseur du logement comprise entre la portion et des première et deuxième composantes structurelles des montants avant ou arrière, ledit corps comprenant une face extérieure étant apte à former une surface continue avec les première et deuxième composantes structurelles, notamment avec des éléments de garnitures.

Les parois latérales dudit corps de l'élément d'habillage peuvent être aptes à recouvrir tout ou partie de la paroi dudit logement.

L'invention porte aussi sur un véhicule comprenant au moins un panneau de carrosserie tel que décrit précédemment.

Avantageusement, un véhicule peut comprendre plusieurs éléments d'habillage amovibles pour un même logement d'un panneau (de carrosserie pour permettre de modifier la personnalisation dudit panneau de carrosserie.

Avantageusement, l'invention propose un élément d'habillage qui est interchangeable du fait que son montage dans un panneau de carrosserie comprenant une portion transparente ou translucide est réversible.

D'autres avantages et caractéristiques de l'invention apparaîtront mieux à la lecture de la description de deux modes de réalisation préférés qui vont suivre, en référence aux figures, réalisés à titre d'exemple indicatif et non limitatif :
- les figures 1A à 1D, 2A, 2B, 3A et 3B sont des vues d'un élément d'habillage amovible selon un premier mode de réalisation de l'invention ;
- la figure 4 représente un panneau de carrosserie comprenant une portion transparente ou translucide, plus précisément une custode avant d'un véhicule comprenant l'élément d'habillage amovible selon les deux modes de réalisation de l'invention ;
- la figure 5 représente le panneau de carrosserie comprenant une portion transparente ou translucide, plus précisément une custode arrière d'un véhicule comprenant l'élément d'habillage amovible selon les deux modes de réalisation de l'invention ;
- la figure 6 illustre une vue en coupe A-A selon la figure 4 du panneau de carrosserie comprenant une portion transparente ou translucide, ici la custode avant, comprenant l'élément d'habillage amovible selon le premier mode de réalisation de l'invention ;
- la figure 7 représente une vue en coupe A-A selon la figure 5 du panneau de carrosserie comprenant une portion transparente ou translucide, ici la custode arrière, comprenant l'élément d'habillage amovible selon le premier mode de réalisation de l'invention ;
- la figure 8 illustre un montage du premier mode de réalisation de l'élément d'habillage amovible dans le panneau de carrosserie comprenant une portion transparente ou translucide, ici la custode avant ;
- la figure 9 illustre une vue en coupe A-A selon la figure 4 du panneau de carrosserie comprenant une portion transparente ou translucide, ici la custode avant, comprenant l'élément d'habillage amovible selon le deuxième mode de réalisation de l'invention, et
- la figure 10 représente une vue en coupe A-A selon la figure 5 du panneau de carrosserie comprenant une portion transparente ou translucide, ici la custode arrière, comprenant l'élément d'habillage amovible selon le deuxième mode de réalisation de l'invention.

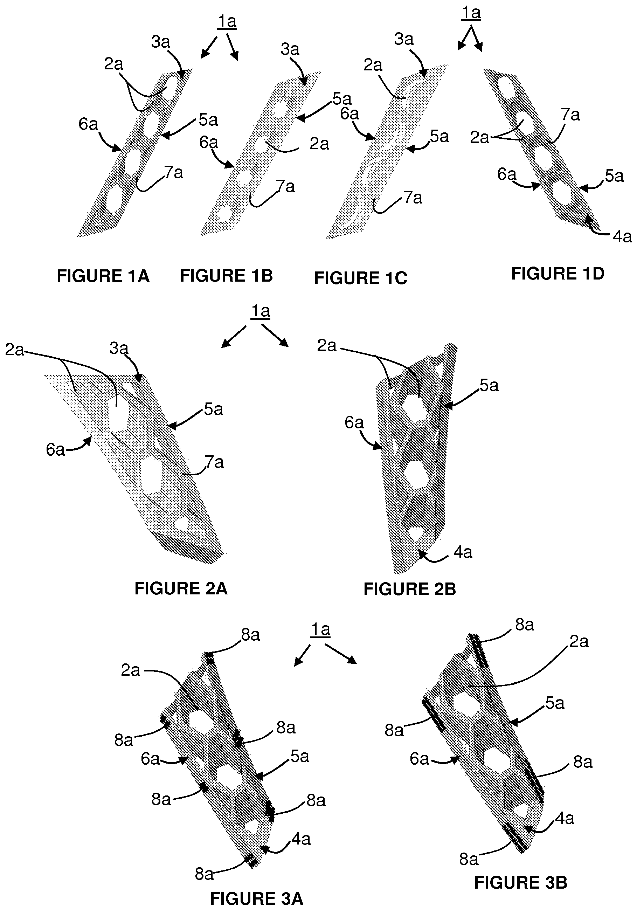

Dans les deux modes de réalisation de l'élément d'habillage 1a, 1b amovible illustrés par les figures 1A à 1D, 2A, 2B, 3A, 3B, 9 et 10, ce dernier comprend un corps 7a, 7b pourvu de faces intérieure 4a, 4b et extérieure 3a, 3b et de parois latérales 5a, 6a, 5b, 6b.

L'élément d'habillage 1a, 1b est destiné à être agencé au niveau d'un panneau de carrosserie 9, 10 comprenant une portion 12 transparente ou translucide. Le panneau 9, 10 peut par exemple correspondre de manière non limitative et non exhaustive à un panneau vitré de la carrosserie du véhicule comportant une vitre fixe et former ainsi par exemple une vitre arrière ou un pavillon panoramique ou encore une custode.

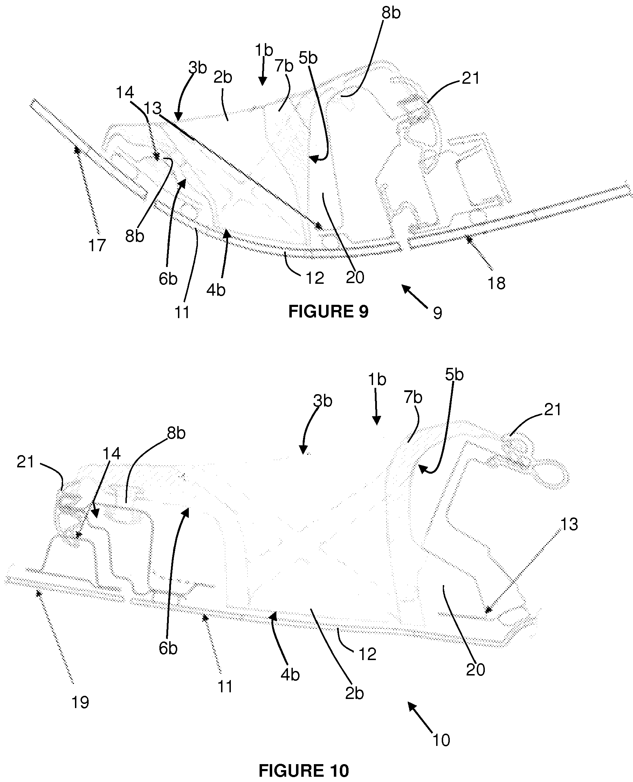

A la différence du premier mode de réalisation de l'élément d'habillage 1a, le deuxième mode de réalisation de l'élément d'habillage 1b, représenté par les figures 9 et 10, comprend des parois latérales 5b, 6b qui sont plus longues. En effet, les parois latérales 5b, 6b du deuxième mode de réalisation de l'élément d'habillage 1b sont prévues pour recouvrir ou habiller des parties constituant le panneau 9, 10.

La face intérieure 4a, 4b du corps 7a, 7b de l'élément d'habillage 1a, 1b, comme représenté plus particulièrement sur les figures 1D, 2B, 3A, 3B, 9 et 10, présente une surface qui est inférieure à celle de la face extérieure 3a, 3b dont des vues sont représentées aux figures 1A à 1C, 2A, 9 et 10. Les parois latérales 5b, 6b ont quant à elles des surfaces sensiblement de mêmes dimensions. Ainsi, le corps 7a, 7b de l'élément d'habillage 1a, 1b présente une section transversale qui peut être trapézoïdale.

Le corps 7a, 7b a une forme allongée avec une section longitudinale pouvant avoir la forme d'un parallélogramme, d'un trapèze ou encore d'un rectangle. Le corps 7a, 7b comprend également une structure comportant au moins une ouverture 2a, 2b susceptible de former alors une structure perforée.

Dans les modes de réalisation décrits aux figures 1A à 1D, 2A, 2B, 3A, 3B, 9 et 10, le corps 7a, 7b de l'élément d'habillage 1a, 1b comporte plusieurs ouvertures 2a, 2b, qui peuvent avoir des formes et des dimensions qui sont similaires ou différentes. Par exemple, aux figures 1A, 1D, 2A, 2B, 3A et 3B, la structure du corps 7a comporte deux types d'ouvertures 2a qui se différencient par leur forme. Pour l'une, la forme est celle d'un polygone et pour l'autre celle d'un triangle.

Dans d'autres exemples illustrés aux figures 1B et 1C, les ouvertures 2a ont des dimensions et des formes similaires. A la figure 1C, les ouvertures 2a ont toutes la forme d'un croissant de lune, tandis que sur la figure 1B, les ouvertures 2a ont toutes la forme de l'opérateur mathématique « + ».

Quel que soit le mode de réalisation de l'élément d'habillage 1a, 1b, on comprend au travers de ces exemples que diverses formes d'ouverture 2a, 2b peuvent alors être réalisées dans la structure perforée du corps 7a, 7b de l'élément d'habillage 1a, 1b et ce tant que ces formes autorisent le passage de la lumière au travers du corps 7a, 7b. En effet, les formes de chaque ouverture 2a, 2b doivent permettre aux passagers et/ou au conducteur du véhicule de pouvoir visualiser l'environnement dans lequel circule le véhicule sans être vus ou peu vus de l'extérieur au travers de ces ouvertures 2a, 2b. De même, on remarquera que la répartition de ces ouvertures 2a, 2b de forme notamment géométrique au niveau de la structure est susceptible de former un maillage permettant aux passagers du véhicule de voir à l'extérieur de ce dernier sans être vus, ou peu vus.

De plus, la forme de ces ouvertures 2a, 2b est également définie pour améliorer la rigidité de l'élément d'habillage 1a, 1b. On notera alors que dans ces conditions, la forme de ces ouvertures 2a, 2b est totalement personnalisable conférant alors différents degrés de finitions particulières de l'élément d'habillage 1a, 1b. La forme de ces ouvertures 2a, 2b permet ainsi de travailler le style de l'élément d'habillage 1a, 1b.

Par ailleurs, le corps 7a, 7b de l'élément d'habillage 1a, 1b est réalisé par exemple en matériau composite ou en matière plastique.

De manière non exhaustive et non limitative, la matière plastique peut être choisie parmi du :
- polypropylène, plus connu sous l'acronyme PP ;
- polyamide, plus connu sous l'acronyme PA ;
- polystyrène, plus connu sous l'acronyme PS ;
- polypropylène expansé, plus connu sous l'acronyme PPE ;
- acrylonitrile butadiène styrène, plus connu sous l'acronyme ABS.

Le corps 7a, 7b de l'élément d'habillage 1a, 1b peut alternativement être réalisé en matière naturelle comme le liège ou le bois. Il peut aussi être réalisé en matière métallique comme l'aluminium. La surface du corps 7a, 7b de l'élément d'habillage 1a, 1b peut revêtir différents aspects en étant par exemple lisse ou encore grainée.

Par ailleurs, l'élément d'habillage 1a, 1b peut être recouvert d'un tissu de finition et être d'une couleur différente des autres garnitures et/ou habillages de l'habitacle du véhicule.

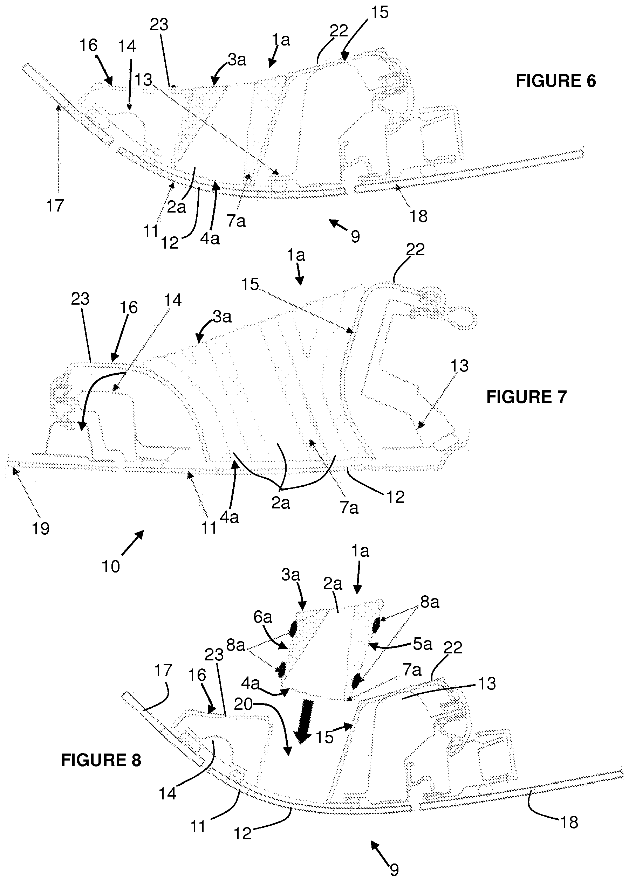

Quel que soit le mode de réalisation de l'élément d'habillage 1a, 1b, celui-ci comporte au moins un élément de liaison 8a, 8b permettant de le fixer de manière réversible au panneau 9, 10 de la carrosserie. Comme représenté plus particulièrement sur les figures 3A et 3B, des éléments de liaison 8a sont agencés sur les parois latérales 5a, 6a du corps 7a du premier mode de réalisation de l'élément d'habillage 1a. Les éléments de liaison 8a sont par exemple en matière élastique ou déformable, tel que du caoutchouc. Ils sont agencés sur tout ou partie de la surface des parois latérales 5a, 6a et ont la forme d'une bande ou encore d'une pastille (figures 3A, 3B et 8).

A titre d'exemple, deux bandes parallèles en matériau élastique sont agencées longitudinalement au niveau des deux extrémités de chaque paroi latérale 5a, 6a, comme dans l'exemple du premier mode de réalisation de l'élément d'habillage 1a représenté à la figure 3B.

Dans la variante de réalisation représentée sur la figure 3a, les deux bandes parallèles sont agencées de manière transversale au niveau des deux extrémités ainsi qu'au milieu de chacune des parois latérales 5a, 6a de l'élément d'habillage 1a.

Dans un autre exemple représenté sur la figure 8, deux pastilles en matériau élastique sont agencées au niveau des deux extrémités de chaque paroi latérale 5a, 6a de l'élément d'habillage 1a.

Comme représenté plus particulièrement sur les figures 9 et 10, dans le deuxième mode de réalisation de l'élément d'habillage 1b, les éléments de liaison 8b sont également agencés au niveau de chaque paroi latérale 5b, 6b et comportent, par exemple, un élément de clipage, d'emboîtage ou encore de fixation positive.

On notera que de tels éléments de liaison 8b mis en oeuvre dans ce deuxième mode de réalisation peuvent également l'être dans le premier mode de réalisation de l'élément d'habillage 1a.

Chaque élément de liaison 8a, 8b permet ainsi une fixation réversible de l'élément d'habillage 1a, 1b qui devient donc facilement démontable. Un tel élément de fixation 8a, 8b évite également toutes les complications indésirables rencontrées habituellement lors d'opérations de montage et de démontage pouvant résulter de l'utilisation d'élément de liaison comme des vis de fixation. En outre, chacun des éléments de liaison 8a, 8b est démontable et/ou interchangeable.

Ainsi que nous l'avons déjà évoqué, l'élément d'habillage 1a, 1b est destiné à être agencé au niveau du panneau 9, 10 de carrosserie du véhicule automobile. Plus particulièrement, l'élément d'habillage 1a, 1b est monté dans un panneau 9, 10 correspondant à une custode d'un véhicule automobile.

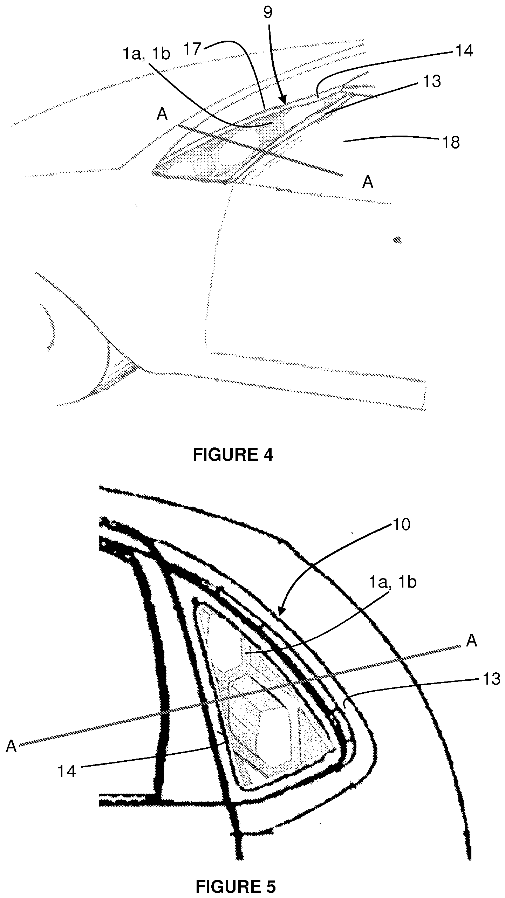

La custode peut, par exemple, correspondre à une custode agencée au niveau de la partie latérale avant de la carrosserie du véhicule ou encore située au niveau de la partie latérale arrière de cette carrosserie. La custode agencée au niveau de la partie latérale avant de cette carrosserie est appelée custode avant 9 et est illustrée plus particulièrement par les figures 4, 6, 8 et 9.

Une telle custode avant 9, plus précisément la custode avant gauche du véhicule, est située au niveau des montants de baie avant du véhicule qui bordent latéralement une baie avant d'une caisse de véhicule automobile laquelle est adaptée à recevoir un pare-brise 17 (figure 4). Les montants de baie avant sont au nombre de deux et permettent notamment de maintenir le pare-brise 17. Chaque montant de baie avant comporte une première composante 13 structurelle et une deuxième composante 14 structurelle (figure 4).

La custode agencée au niveau de la partie latérale arrière de la carrosserie du véhicule est appelée custode arrière 10 et est illustrée plus particulièrement par les figures 5, 7 et 10. Une telle custode arrière 10, plus précisément la custode arrière gauche du véhicule, est située au niveau du montant de baie arrière du véhicule entre la portière arrière du véhicule et la partie arrière de ce dernier.

La caisse du véhicule comporte une baie arrière qui est adaptée à recevoir une vitre arrière et des montants qui bordent latéralement cette baie nommés montants de baie arrière, qui sont également au nombre de deux et permettent notamment de maintenir la vitre arrière. Chaque montant de baie arrière comporte une première composante 13 structurelle et une deuxième composante 14 structurelle (figure 5).

La custode 9, 10, c'est-à-dire la custode avant 9 ou la custode arrière 10, comporte également une vitre, autrement appelée vitre de custode 11, qui est fixée aux deux composantes structurelles 13, 14, au niveau des bords latéraux de cette vitre 11 grâce, par exemple, à un cordon de colle et de mastic. Dans la custode avant 9, la vitre de custode 11 est située entre le pare-brise 17 et la vitre 18 d'une portière avant du véhicule, comme représenté sur les figures 6, 8 et 9. Dans la custode arrière 10, la vitre 11 est située entre la vitre 19 de la portière arrière du véhicule et la partie arrière de cette dernière.

Comme représenté plus particulièrement sur les figures 6 à 10, la vitre 11 comporte une portion 12 transparente, laquelle présente une surface qui est sensiblement similaire à celle de la face intérieure 4a, 4b du corps 7a, 7b de l'élément d'habillage 1a, 1b qui est agencée en regard de cette portion 12 de la vitre 11, lorsque l'élément d'habillage 1a, 1b est monté dans la custode.

Dans d'autres variantes de réalisation non représentées, on notera que la surface de la portion 12 transparente peut être sensiblement supérieure ou inférieure à celle de la face intérieure 4a, 4b du corps 7a, 7b de l'élément d'habillage 1a, 1b.

Par ailleurs, la custode 9, 10 comporte un logement 20 définissant un puits de lumière. Le logement 20 est compris dans l'habitacle du véhicule et est constitué d'une paroi et d'un fond correspondant à la portion 12 de la vitre 11 de custode. Le logement 20 est défini pour recevoir tout ou partie du corps 7a, 7b de l'élément d'habillage 1a, 1b. Un tel logement 20 est représenté sur la figure 8 pour la custode avant 9.

Aux figures 6 à 8 représentant les custodes 9, 10 dans lesquelles est monté le premier mode de réalisation de l'élément d'habillage 1a, la paroi du logement 20 est formée par des éléments de garniture 15, 16 qui permettent d'habiller les première 13 et deuxième 14 composantes structurelles du montant de baie associé, alors qu'aux figures 9 et 10, où les custodes 9, 10 sont dépourvues de tels éléments de garniture 15, 16, la paroi du logement 20 est formée par les première 13 et deuxième 14 composantes structurelles des montants avant ou arrière.

Le logement 20 peut avoir une forme évasée susceptible d'être complémentaire à celle de l'élément d'habillage 1a. Lorsque l'élément d'habillage 1a est monté dans le logement 20, les éléments de liaison 8a en matériau élastique sont contraints en étant déformés contre la surface des éléments de garniture 15, 16 formant la paroi du logement 20. Ainsi, les éléments de fixation 8a agencés sur les parois latérales 5a, 6a du corps 7a de l'élément d'habillage 1a en coopérant avec la surface des éléments de garniture 15, 16 formant la paroi du logement 20 contribuent à maintenir fixé l'élément d'habillage 1a de manière réversible dans le logement 20 de la custode.

Aux figures 9 et 10 représentant les custodes 9, 10 dans lesquelles est monté le deuxième mode de réalisation de l'élément d'habillage 1b, ces dernières sont dépourvues de tels éléments de garniture 15, 16. De la même manière, les custodes 9, 10 comportent également un logement 20 définissant un puits de lumière dans lequel est agencé l'élément d'habillage 1b.

Quel que soit le mode de réalisation de l'élément d'habillage 1a, 1b, lorsque celui-ci est monté dans le logement 20, les parois latérales 5a, 6a, 5b, 6b du corps 7a, 7b sont aptes à recouvrir tout ou partie de la paroi dudit logement 20. Lors du montage de l'élément d'habillage 1a, 1b dans le logement 20 des custodes 9, 10, la face intérieure 4a, 4b du corps 7a, 7b est alors positionnée en face de l'ouverture du logement 20 dans l'habitacle du véhicule. Une force est alors appliquée au niveau de la face extérieure 3a, 3b afin d'insérer le corps 7a, 7b de l'élément d'habillage 1a, 1b dans le logement 20, jusqu'à ce que la face intérieure 4a, 4b soit à proximité voire en contact avec la portion 12 de la vitre 11 de custode.

Ainsi, le corps de l'élément d'habillage 1a, 1b s'étend alors sur toute une épaisseur du logement 20 comprise entre la portion 12 et les première 13 et deuxième 14 composantes structurelles des montants avant ou arrière. Dans cette configuration, le corps 7a, 7b comprend une face extérieure 3a, 3b qui est apte à former une surface continue avec les première 13 et deuxième 14 composantes structurelles, notamment avec les éléments de garnitures 15, 16. Par exemple, à la figure 6, la face extérieure 3a réalise une telle surface continue avec des surfaces extérieures 22, 23 respectives des garnitures 15, 16, lorsque l'élément d'habillage 1a est agencé dans le logement 20 du panneau de carrosserie 9.

Lors de ce montage, chaque élément de liaison 8a, 8b coopère alors avec une zone et/ou un organe de liaison complémentaire et compatible agencé au niveau de la paroi du logement 20, afin d'assurer une fixation réversible de l'élément d'habillage 1a, 1b dans le logement 20.

Ainsi à titre d'exemple, les custodes 9, 10 illustrées aux figures 6 à 8 comportent une telle zone qui est apte à coopérer avec l'élément de liaison 8a, quand celui-ci concerne par exemple une bande ou encore une pastille réalisée en matière élastique. Un tel élément de liaison 8a en matière élastique est alors contraint par cette zone en étant déformé lorsque le premier mode de réalisation de cet élément d'habillage 1a est agencé dans le logement 20. Cette zone correspond par exemple à une partie de la surface de l'élément de garniture 15, 16, qui est en contact avec un élément de liaison 8a.

Dans un autre exemple illustré aux figures 9 et 10, les custodes 9, 10 comportent un organe de liaison qui est apte à coopérer avec l'élément de liaison 8b quand celui-ci concerne, par exemple, un élément de clipage, d'emboîtage ou encore de fixation positive. Cet organe de liaison est du type à permettre une fixation réversible du deuxième mode de réalisation de l'élément d'habillage 1b et est agencé au niveau des composantes structurelles 13, 14 des montants avant ou arrière.

Plus précisément, la custode, ici la custode avant 9, illustrée à la figure 9 comporte deux organes de liaison, ici des trous, coopérant avec deux éléments de liaison 8b. Ces organes de liaison sont aménagés respectivement au niveau de la première 13 et la deuxième 14 composante structurelle du montant de baie avant.

S'agissant de la custode arrière 10 illustrée à la figure 10, elle comporte un seul organe de liaison, ici un trou, qui est apte à coopérer avec un élément de liaison 8b. Cet organe de liaison est aménagé au niveau de la deuxième composante structurelle 14 du montant de baie arrière.

Ainsi que nous l'avons déjà évoqué, le deuxième mode de réalisation de l'élément d'habillage 1b monté dans les custodes 9, 10 illustrées aux figures 9 et 10, comporte des parois latérales 5b, 6b d'une longueur suffisante pour recouvrir ou habiller les première 13 et deuxième 14 composantes structurelles des montants avant ou arrière. Afin d'améliorer la fixation de ces parois latérales 5b, 6b, des organes de liaison 21 supplémentaires peuvent être ajoutés au niveau des première 13 et deuxième 14 composantes structurelles, afin de coopérer avec une extrémité du corps 7b formée par chaque paroi latérale 5b, 6b avec la face extérieure 3a, 3b.

La présente invention n'est pas limitée aux modes de réalisation qui ont été explicitement décrits, mais elle en inclut les diverses variantes et généralisations contenues dans le domaine des revendications ci-après.

## Revendications

1. Panneau (9, 10) de carrosserie d'un véhicule, notamment une custode, comprenant une portion (12) transparente ou translucide, **caractérisé en ce qu'**il comprend un élément d'habillage (1a, 1b) amovible comportant un corps (7a, 7b) pourvu d'une structure comprenant des ouvertures (2a, 2b) susceptibles d'autoriser le passage de la lumière au travers de ce corps (7a, 7b), ledit corps (7a, 7b) comprenant au moins un élément de liaison (8a, 8b) permettant de le fixer de manière réversible au niveau dudit panneau de carrosserie (9, 10), l'élément d'habillage (1a, 1b) étant monté dans un logement (20) compris dans un habitacle du véhicule, le logement étant constitué d'une paroi formée par des éléments de garniture (15, 16) ou des composantes structurelles (13, 14) de montants avant ou arrière et d'un fond correspondant à ladite portion (12) du panneau (9, 10).

2. Panneau (9, 10) selon la revendication précédente, **caractérisé en ce que** chaque élément de liaison (8a, 8b) est agencé au niveau de parois latérales (5a, 6a, 5b, 6b) dudit corps (7a, 7b).

3. Panneau (9, 10) selon l'une quelconque des revendications 1 et 2, **caractérisé en ce que** le corps (7a, 7b) présente une forme allongée avec une section transversale trapézoïdale et/ou une section longitudinale ayant sensiblement la forme d'un parallélogramme.

4. Panneau (9, 10) selon l'une quelconque des revendications précédentes, **caractérisé en ce que** le corps (7a, 7b) comporte une face intérieure (4a, 4b) dont la surface est inférieure à celle d'une face extérieure (3a, 3b).

5. Panneau (9, 10) selon l'une quelconque des revendications précédentes, **caractérisé en ce que** les ouvertures (2a, 2b) sont distribuées sur le corps (7a, 7b) de sorte que sa structure forme un maillage.

6. Panneau (9, 10) selon l'une quelconque des revendications précédentes, **caractérisé en ce qu'**il est apte à être fixé sur tous panneaux (9, 10) de carrosserie comprenant une vitre fixe et formant une vitre arrière, un pavillon panoramique ou encore une custode.

7. Panneau (9, 10) selon l'une quelconque des revendications précédentes, **caractérisé en ce qu'**un élément de liaison (8a, 8b) correspond à un élément de clipage, d'emboîtage, de fixation positive ou encore à une bande ou une pastille en matière élastique ou déformable.

8. Panneau (9, 10) selon l'une quelconque des revendications précédentes, **caractérisé en ce que** le logement (20) est défini pour recevoir tout ou partie du corps (7a, 7b) de l'élément d'habillage (1a, 1b) dont une face intérieure (4a, 4b) est agencée en regard de ladite portion (12) du panneau (9, 10), lorsque l'élément d'habillage (1a, 1b) est monté dans ledit logement (20).

9. Panneau (9, 10) selon la revendication précédente, **caractérisé en ce que** le corps (7a, 7b) de l'élément d'habillage (1a, 1b) s'étend sur toute une épaisseur du logement (20) comprise entre la portion (12) et des première (13) et deuxième (14) composantes structurelles des montants avant ou arrière, ledit corps (7a, 7b) comprenant une face extérieure (3a, 3b) étant apte à former une surface continue avec les première (13) et deuxième (14) composantes structurelles, notamment avec des éléments de garnitures (15, 16).

10. Panneau (9, 10) selon l'une quelconque des revendications précédentes, **caractérisé en ce que** les parois latérales (5a, 6a, 5b, 6b) dudit corps (7a, 7b) de l'élément d'habillage (1a, 1b) sont aptes à recouvrir tout ou partie de la paroi dudit logement (20).

11. Véhicule comprenant au moins un panneau (9, 10) de carrosserie selon l'une quelconque des revendications précédentes.

## Patentansprüche

1. Karosserieplatte (9, 10) eines Fahrzeugs, insbesondere hinteres kleines Seitenfenster, umfassend einen durchsichtigen oder durchscheinenden Teil (12), **dadurch gekennzeichnet, dass** sie ein abnehmbares Verkleidungselement (1a, 1b) umfasst, umfassend einen Körper (7a, 7b), der mit einer Struktur versehen ist, umfassend Öffnungen (2a, 2b), die geeignet sind, den Durchgang des Lichts durch diesen Körper (7a, 7b) zu gestatten, wobei der Körper (7a, 7b) mindestens ein Verbindungselement (8a, 8b) umfasst, das es ermöglicht, ihn auf reversible Weise im Bereich der Karosserieplatte (9, 10) zu befestigen, wobei das Verkleidungselement (1a, 1b) in einer Aufnahme (20) montiert ist, die in einem Fahrgastraum des Fahrzeugs enthalten ist, wobei die Aufnahme von einer Wand, die von Beschlagselementen (15, 16) oder Strukturkomponenten (13, 14) von vorderen oder hinteren Stehern gebildet ist, und einem Boden entsprechend dem Abschnitt (12) der Platte (9, 10) gebildet ist.

2. Platte (9, 10) nach dem vorhergehenden Anspruch, **dadurch gekennzeichnet, dass** jedes Verbindungselement (8a, 8b) im Bereich von Seitenwänden (5a, 6a, 5b, 6b) des Körpers (7a, 7b) angeordnet ist.

3. Platte (9, 10) nach einem der Ansprüche 1 und 2, **dadurch gekennzeichnet, dass** der Körper (7a, 7b) eine längliche Form mit einem trapezförmigen Querschnitt und/oder einem länglichen Querschnitt mit im Wesentlichen der Form eines Parallelogramms aufweist.

4. Platte (9, 10) nach einem der vorhergehenden Ansprüche, **dadurch gekennzeichnet, dass** der Körper (7a, 7b) eine Innenseite (4a, 4b) umfasst, deren Oberfläche kleiner als jene einer Außenseite (3a, 3b) ist.

5. Platte (9, 10) nach einem der vorhergehenden Ansprüche, **dadurch gekennzeichnet, dass** die Öffnungen (2a, 2b) auf dem Körper (7a, 7b) derart verteilt sind, dass seine Struktur ein Netz bildet.

6. Platte (9, 10) nach einem der vorhergehenden Ansprüche, **dadurch gekennzeichnet, dass** sie geeignet ist, auf allen Karosserieplatten (9, 10), die eine fixe Scheibe umfassen und eine hintere Scheibe, ein Panoramadach oder auch ein hinteres kleines Seitenfenster bilden, befestigt zu werden.

7. Platte (9, 10) nach einem der vorhergehenden Ansprüche, **dadurch gekennzeichnet, dass** ein Verbindungselement (8a, 8b) einem Element zum Festklemmen, Einstecken, positiven Befestigen oder auch einem Streifen oder einem Plättchen aus elastischem oder verformbarem Material entspricht.

8. Platte (9, 10) nach einem der vorhergehenden Ansprüche, **dadurch gekennzeichnet, dass** die Aufnahme (20) definiert ist, um die Gesamtheit oder einen Teil des Körpers (7a, 7b) des Verkleidungselements (1a, 1b) aufzunehmen, von dem eine Innenseite (4a, 4b) gegenüber dem Abschnitt (12) der Platte (9, 10) angeordnet ist, wenn das Verkleidungselement (1a, 1b) in der Aufnahme (20) montiert ist.

9. Platte (9, 10) nach dem vorhergehenden Anspruch, **dadurch gekennzeichnet, dass** sich der Körper (7a, 7b) des Verkleidungselements (1a, 1b) auf einer gesamten Dicke der Aufnahme (20) zwischen dem Abschnitt (12) und ersten (13) und zweiten (14) Strukturkomponenten der vorderen oder hinteren Steher erstreckt, wobei der Körper (7a, 7b), der eine Außenseite (3a, 3b) umfasst, geeignet ist, eine durchgehende Fläche mit der ersten (13) und zweiten (14) Strukturkomponente, insbesondere mit Elementen von Beschlägen (15, 16), zu bilden.

10. Platte (9, 10) nach einem der vorhergehenden Ansprüche, **dadurch gekennzeichnet, dass** die Seitenwände (5a, 6a, 5b, 6b) des Körpers (7a, 7b) des Verkleidungselements (1a, 1b) geeignet sind, die Gesamtheit oder einen Teil der Wand der Aufnahme (20) zu bedecken.

11. Fahrzeug, umfassend mindestens eine Karosserieplatte (9, 10) nach einem der vorhergehenden Ansprüche.

## Claims

1. Vehicle body panel (9, 10), in particular a quarter window, comprising a transparent or translucent portion (12), **characterized in that** it comprises a removable trim element (1a, 1b) having a body (7a, 7b) provided with a structure comprising openings (2a, 2b) able to allow the passage of light across this body (7a, 7b), the said body (7a, 7b) comprising at least one connecting element (8a, 8b) allowing it to be fixed in a reversible manner along the said body panel (9, 10), the trim element (1a, 1b) being mounted in a seat (20) comprised within the passenger compartment of the vehicle, the seat consisting of a wall formed by furnishing elements (15, 16) or structural components (13, 14) of front or rear uprights and of a bottom corresponding to the said portion (12) of the panel (9, 10) .

2. Panel (9, 10) according to the preceding claim, **characterized in that** each connecting element (8a, 8b) is arranged along side walls (5a, 6a, 5b, 6b) of the said body (7a, 7b).

3. Panel (9, 10) according to any one of Claims 1 and 2, **characterized in that** the body (7a, 7b) has an elongated form with a trapezoidal cross-section and/or a longitudinal section having substantially the form of a parallelogram.

4. Panel (9, 10) according to any one of the preceding claims, **characterized in that** the body (7a, 7b) has an inner side (4a, 4b), the surface of which is smaller than that of an outer side (3a, 3b).

5. Panel (9, 10) according to any one of the preceding claims, **characterized in that** the openings (2a, 2b) are distributed over the body (7a, 7b) so that its structure forms a mesh.

6. Panel (9, 10) according to any one of the preceding claims, **characterized in that** it is suitable for being fixed on all the body panels (9, 10) comprising a fixed window and forming a rear window, a panoramic roof panel or also a quarter window.

7. Panel (9, 10) according to any one of the preceding claims, **characterized in that** a connecting element (8a, 8b) corresponds to a clipping, interlocking or positive fixing element or also to a strip or a pad of elastic or deformable material.

8. Panel (9, 10) according to any one of the preceding claims, **characterized in that** the seat (20) is defined so as to receive all or part of the body (7a, 7b) of the trim element (1a, 1b), an inner side (4a, 4b) of which is arranged facing the said portion (12) of the panel (9, 10) when the trim element (1a, 1b) is mounted inside the said seat (20).

9. Panel (9, 10) according to the preceding claim, **characterized in that** the body (7a, 7b) of the trim element (1a, 1b) extends over an entire thickness of the seat (20) comprised between the portion (12) and the first structural component (13) and second structural component (14) of the front or rear uprights, the said body (7a, 7b) comprising an outer side (3a, 3b) suitable for forming a continuous surface with the first structural component (13) and second structural component (14), in particular with furnishing elements (15, 16).

10. Panel (9, 10) according to any one of the preceding claims, **characterized in that** the side walls (5a, 6a, 5b, 6b) of the said body (7a, 7b) of the trim element (1a, 1b) are suitable for covering all or part of the wall of the said seat (20).

11. Vehicle comprising at least one body panel (9, 10) according to any one of the preceding claims.
